# EUROPÄISCHE PATENTANMELDUNG

(11) **EP 4 283 717 A2**
(43) Veröffentlichungstag der Anmeldung: **29.11.2023**
(21) Anmeldenummer: 23201880.4
(22) Anmeldetag: 15.05.2017
(51) Int. Cl.: H01M 4/36

(54) **LITHIUMIONENLEITENDES VERBUNDMATERIAL, UMFASSEND WENIGSTENS EIN POLYMER UND LITHIUMIONENLEITENDE PARTIKEL**

(30) Priorität: 18.05.2016 DE 102016208532
(62) Teilanmeldung aus: 17723400.2
(71) Anmelder: SCHOTT AG, 55122 Mainz (DE)
(72) Erfinder: SCHUHMACHER, Joerg, 70806 Kornwestheim (DE); DREWKE, Jochen, 55128 Mainz (DE); SCHMITT, Hans-Joachim, 55437 Ockenheim (DE); TREIS, Philipp, 55127 Mainz (DE); KUNZE, Miriam, 31535 Neustadt am Rübenberge (DE); ROTERS, Andreas, 55118 Mainz (DE); SCHNEIDER, Meike, 65232 Taunusstein (DE)
(74) Vertreter: Fuchs Patentanwälte Partnerschaft mbB

(57) **Zusammenfassung**

Es wird ein lithiumionenleitendes Verbundmaterial beschrieben, umfassend wenigstens ein Polymer und lithiumionenleitende Partikel, wobei der Grenzflächenwiderstand für die Lithiumionenleitfähigkeit zwischen dem Polymer und den Partikeln aufgrund einer Oberflächenveränderung der Partikel verringert und somit die Lithiumionenleitfähigkeit größer ist als bei einem vergleichbaren Verbundmaterial, bei dem der Grenzflächenwiderstand zwischen dem Polymer und den Partikeln nicht verringert ist.

## Beschreibung

Die Erfindung betrifft ein lithiumionenleitendes Verbundmaterial, wobei das Verbundmaterial wenigstens ein Polymer und lithiumionenleitende Partikel umfasst.

Eine Schlüsselherausforderung für hochleistungsfähige, zuverlässige und sichere Lösungen im Bereich der Elektromobilität stellt die Bereitstellung von elektrochemischen Speicheraggregaten mit hoher Energie- und Leistungsdichte dar. Lithiumionenbatterien vereinen eine Reihe herausragender Eigenschaften auf sich, wie hohe Energie- und Leistungsdichten, lange Lebenszyklen sowie eine gute Umweltverträglichkeit, die sie zu einer Energieversorgungseinheit im genannten Anwendungsbereich machen.

Lithiumionenbatterien bauen sich in der Regel aus den folgenden Komponenten auf: Kathode, Anode, elektronisch isolierendem Separator und lithiumionenleitendem Elektrolyten. Während des Entladevorgangs wandern die Lithiumionen von Anode durch den Elektrolyten und eine Separatormembran hindurch zur Kathode und lagern sich dort ein. Gleichzeitig fließen die Elektronen über den äußeren Stromkreis, in den der Verbraucher integriert ist, von der Kathode zur Anode. Während des Ladevorgangs laufen die Prozesse in umgekehrter Richtung ab.

Neben der Rate für die Einlagerung in die Elektrodenmaterialien, insbesondere kathodenseitig, spielt die Migrationsgeschwindigkeit der Lithiumionen durch den Elektrolyten eine wichtige Rolle und bestimmt entscheidend die Leistungsfähigkeit des Batteriegesamtsystems. Dies gilt insbesondere für Lithiumbatterien (Lithium-Metall-batterien) und Festkörper-Lithiumionenbatterien (All Solid State Batteries, ASSB), in der nicht - wie bei gängigen Lithiumionenbatteriesystemen üblich - ein flüssiger Elektrolyt mit einer naturgemäß vergleichsweise hohen Lithiumionenleitfähigkeit zum Einsatz kommt, sondern zur Erhöhung der bei einem System hoher Energiedichte notwendigen Sicherheit ein Festkörperkörperelektrolyt verwendet wird. Dabei kann es sich um einen Polymerelektrolyten handeln, bestehend aus einem Polymer und einer lithiumionenleitenden Verbindung (z.B. einem sogenannten Leitsalz), die die Lithiumionenleitfähigkeit generiert.

Gemäß Croce, F. et al., Nature 1998, 456; Li, Q. et al., Solid State Ionics 159 (2003) 97- 109 und Stephan, A. M. et al, Polymer 47 (2006) 5952-59646 lässt sich die Lithiumionenleitfähigkeit von Polymerelektrolyten signifikant durch Integration von anorganischen, insbesondere keramischen Füllstoffen erhöhen (lithiumionenleitendes Verbundmaterial). Dazu muss der Füllstoff nicht unbedingt lithiumionenleitend sein. Der Grund ist, dass die Ausbildung kristalliner Bereiche im nicht-leitenden, thermoplastischen Polymer in einem nicht zu vernachlässigenden Maße unterdrückt wird, wodurch sich die Beweglichkeit der Ionen aus dem zu dotierten Leitsalz deutlich erhöht.

Eine weitere Steigerung der Lithiumionenleitfähigkeit des Verbundmaterials lässt sich bewerkstelligen, wenn anstelle eines nichtlithiumionenleitenden Füllstoffs ein Festkörper-Lithiumionenleiter (Solid Ion Conductor, SIC) als Füllstoff in den Polymerelektrolyten integriert wird. Dies ist auf den Umstand zurückzuführen, dass geeignete Materialien gegenüber der umgebenden Polymerelektrolytmatrix nochmals eine gesteigerte Lithiumionenkornleitfähigkeit aufweisen.

Choi, J.-H. et al., Journal of Power Sources 274 (2015) 458-463 beschreiben dagegen ein lithiumionenleitendes Kompositmaterial, bei dem Lithiumlanthanzirkonat (LLZO) als keramischer Festkörperionenleiter als Füllstoff in einen Polymerelektrolyten eingearbeitet ist. Dabei wird ein Optimum für die Lithiumionenleitfähigkeit erreicht, wenn der Füllstoffgehalt 52,5 % beträgt. Dessen Wert wurde in dem Fall gemessen bei einer Temperatur von 55 °C zu 4,42 × 10⁻⁴ S/cm ermittelt. Die Veröffentlichung liefert keinen Hinweis darauf, dass die Partikeln aus dem keramischen Festkörperionenleiter vor deren Einarbeitung ins Polymer an ihrer Oberfläche einer speziellen Behandlung unterworfen wurden, die den Durchtritt der Li⁺-Ladungsträger durch die Grenzfläche zwischen Polymer und keramischen Material erleichtern soll.

Werden für die Matrix übliche Werte im Größenordnungsbereich von 10⁻⁶ bis 10⁻⁵ mS/cm erreicht, rangieren diese sowohl für lonenleiter mit Granat-artigen Kristallphasen wie Lithiumlanthanzirkonoxid (LLZO) als auch für phosphatbasierte lonenleiter mit einer zu NaSICon isostrukturellen Kristallphase (Lithium Super lonic Conductor, LISICON) insbesondere Li_{1+x-y}M⁵⁺_{y}M³⁺ₓM⁴⁺_{2-x-y}(PO₄)₃ (M: Kation der Wertigkeit +3, +4 oder +5) als lithiumionenleitendes Material im Größenordnungsbereich von 10⁻⁴ bis 10⁻³ mS/cm.

Es wurden folgende Methoden für die Herstellung von anorganischen, lithiumionenleitenden Materialien beschrieben:
Sakuda, A. et al., Journal of The Electrochemical Society 156 (2009) A27-A32 beschreiben die Beschichtung von sulfidischen Festkörperionenleitern im System Li₂S-P₂S₅ mit einer Schale aus Li₂O-SiO₂ zur Reduzierung des Grenzflächenwiderstands zwischen Festkörperelektrolyten und LiCoO₂ als Kathodenaktivmaterial, die im zugrunde gelegten Zelldesign direkt miteinander in Kontakt gebracht werden.
Shimonishi, Y. et al., Solid State Ionics 183 (2011) 48-53 beschreiben die Behandlung von gesinterten Presslingen aus LLZO in einer gesättigten Lithiumchloridlösung bei 50 °C für 7 Tage, wodurch die Korngrenzenleitfähigkeit des Materials leicht gesteigert werden kann, während die Leitfähigkeit im Bulkmaterial im Wesentlichen unverändert bleibt. Ermittelt wurde diese unter Durchführung der Impedanzspektroskopie. Bei Behandlung von entsprechenden Proben in ähnlicher Weise in einer 1M wässrigen LiOH-Lösung, destilliertem Wasser oder 0,1 M Salzsäure als Modifizierungsagenzien nimmt die Korngrenzenleitfähigkeit hingegen ab.

Kommen Elektrodenaktivmaterialien mit Flüssigelektrolyten in Kontakt, so bildet sich beim ersten Ladevorgang infolge nur schwer steuerbarer Nebenreaktionen eine lithiumionenleitfähige feste Grenzschicht, ein sogenannter Solid Electrolyte Interface (SEI), an der Oberfläche der Partikel des Aktivmaterials aus. Diese ist bei der Zyklisierung des Batteriesystems für eine hinreichende Geschwindigkeit im Blick auf den Transport der Li⁺-Ladungsträger in das Aktivmaterial hinein und wieder heraus unabdingbar. Da es sich - wie bereits erwähnt - um eine vergleichsweise schwer zu kontrollierende Reaktion handelt, gab es in der Vergangenheit Ansätze durch gezielte Modifizierung der Oberfläche der Elektrodenmaterialpartikel den Ladungsübertritt mit höherer Reproduzierbarkeit zu gewährleisten bzw. hierfür gar eine Beschleunigung herbeizuführen.

Neben anorganischen Beschichtungen wird in der Literatur auch über die Verwendung von Polymerelektrolyten mit hoher elektronischer Leitfähigkeit und Lithiumionenleitfähigkeit zur Funktionalisierung berichtet. Als wichtige Vertreter werden hierbei Poly(3,4-ethylendioxythiophen)-polystyrolsufonat (PEDOT:PSS)-(Yang, Y. et al., Nano 5 (2011) 9187) bzw. Poly(3,4-ethylendioxthiophen-co-poly(ethylenglycol) (PEDOT-co-PEG)-Block-co-Polymer (Ju, S. H. et al., ACS Appl. Mater. Interfaces 6 (2014) 2545), Polyimid (Park, J. H. et al., J. Mater. Chem. 22 (2012) 12574), PEDOT dotiert mit p-Toluolsulfonsäure (Murugan, A. V. et al., Electrochem. Commun. 10 (2008) 903) und Polyethylenoxid (PEO) (Lee, S. H. et al., Chem. Mater. 26 (2014) 2579) genannt.

Aus DE 10 2014 206 040 A1 ist ein Kompositelektrolyt bekannt, das anorganisch-organisches Hybridmaterial mit Leitsalz und funktionalisierte Partikel enthält.

Aus WO 2015/043917 A1 ist ein lithiumionenleitendes Verbundmaterial bekannt, umfassend wenigstens ein Polymer und lithiumionenleitende Partikel, wobei das Polymer lithiumionenleidend und dadurch der Grenzflächenwiderstand zwischen dem Polymer und den Partikeln verringert ist.

In DE 10 2012 022 606 A1 ist eine beschichtete Elektrode beschrieben, die zwei Beschichtungen aufweist: a) eine nanostrukturierte Beschichtung, die Partikel (kristallines anorganisches Material) enthält, und b) eine nanostrukturierte Hybridpolymerbeschichtung. Die Partikel in der Beschichtung a) sind bevorzugt elektrisch halbleitend oder leitend. Die Beschichtung b) kann ein Polymer und ein Lithiumsalz enthalten und bevorzugt eine Lithiumionenleitfähigkeit im Bereich von 10⁻⁷ bis 1 S/cm aufweisen.

Davon ausgehend ist es Aufgabe der Erfindung ein lithiumionenleitendes Verbundmaterial bereitzustellen, das eine gegenüber dem Stand der Technik verbesserte Lithiumionenleitfähigkeit aufweist. Das Verbundmaterial soll insbesondere als Lithiumionenleiter in Lithiumionenbatterien und in Lithiumbatterien geeignet sein.

Gemäß Anspruch 1 wird diese Aufgabe gelöst durch ein lithiumionenleitendes Verbundmaterial, umfassend wenigstens ein Polymer und lithiumionenleitende Partikel, wobei der Grenzflächenwiderstand für die Lithiumionenleitfähigkeit zwischen dem Polymer und den Partikeln aufgrund einer Oberflächenveränderung der Partikel verringert und somit die Lithiumionenleitfähigkeit größer ist als bei einem vergleichbaren Verbundmaterial, bei dem der Grenzflächenwiderstand zwischen dem Polymer und den Partikeln nicht verringert ist.

Im Wesentlichen umgibt also das Polymer die Partikel bzw. die Partikel sind im Polymer eingebettet.

Das erfindungsgemäße Verbundmaterial weist eine verbesserte Leitfähigkeit für Lithiumionen auf und ist daher insbesondere als Lithiumionenleiter in Lithiumionen- bzw. Lithiumbatterien geeignet.

Beansprucht wird im Wesentlichen also ein lithiumionenleitendes Verbundmaterial, das folgende Merkmale aufweist:
1) Das lithiumionenleitfähige Material umfasst wenigstens ein Polymer und lithiumionenleitende Partikel;
2) der Grenzflächenwiderstand für die Lithiumionenleitfähigkeit zwischen dem Polymer und den Partikeln ist aufgrund einer Oberflächenveränderung der Partikel verringert und somit
3) die Lithiumionenleitfähigkeit größer ist als bei einem vergleichbaren Verbundmaterial, bei dem der Grenzflächenwiderstand zwischen dem Polymer und den Partikeln nicht verringert ist.

Um beispielweise zu prüfen, ob ein Verbundmaterial unter den Schutzumfang von Anspruch 1 fällt oder nicht, kann man zwei Verbandmaterialien vergleichen (Verbundmaterial A mit vergleichbarem Verbundmaterial B):
1) Ein Verbundmaterial A mit den Merkmalen 1) und 2) (Polymer A, Partikel A, Grenzflächenwiderstand G zwischen Polymer A und Partikel A aufgrund einer Oberflächenveränderung der Partikel A verringert);
2) ein vergleichbares Verbundmaterial B mit dem Merkmal 3) (gleiches Polymer A, gleiche Partikel A, Grenzflächenwiderstand G zwischen Polymer A und Partikel A nicht verringert); und
3) die Lithiumionenleitfähigkeit von Verbundmaterial A und vergleichbarem Verbundmaterial B messen (gleiche Messbedingungen, gleiche Messtemperatur beim Fachmann implizit vorausgesetzt);
4) die beiden Messergebnisse vergleichen, falls die Lithiumionenleitfähigkeit vom Verbandmaterial A größer ist, als vom vergleichbaren Verbundmaterial B fällt das Verbandmaterial A unter den Schutzumfang.

Es kommt also insbesondere auf den verringerten Grenzflächenwiderstand aufgrund einer Oberflächenveränderung der Partikel A von Verbundmaterial A im Vergleich zum vergleichbaren Verbundmaterial B an.

Wie der Grenzflächenwiderstand zwischen Polymer und Partikel aufgrund einer Oberflächenveränderung der Partikel verringert und somit die Lithiumionenleitfähigkeit vergrößert wird, ist insbesondere Gegenstand der Unteransprüche und wird im Folgenden in der Beschreibung detailliert dargestellt.

Bevorzugt wird diese Aufgabe gelöst durch ein lithiumionenleitendes Verbundmaterial, umfassend wenigstens ein Polymer und lithiumionenleitende Partikel, wobei der Grenzflächenwiderstand für die Lithiumionenleitfähigkeit zwischen dem Polymer und den Partikeln verringert und somit die Lithiumionenleitfähigkeit mindestens 5 %, besonders bevorzugt mindestens 10 %, noch bevorzugter mindestens 15 % größer ist, als bei einem vergleichbaren Verbundmaterial, bei dem der Grenzflächenwiderstand zwischen dem Polymer und den Partikeln nicht, insbesondere nicht aufgrund einer Oberflächenveränderung der Partikel verringert ist.

Um die Lithiumionenleitfähigkeit eines erfindungsgemäßen Verbundkörpers und eines vergleichbaren Verbundkörpers vergleichen zu können, werden die gleiche Messmethode und die gleichen Messparameter für beide Verbundkörper gewählt, z.B. die Impedanzspektroskopie.

Das Polymer umfasst vorzugsweise Polyethylenoxid (PEO) oder besteht aus Polyethylenoxid oder umfasst Derviate von Polyethylenoxid oder besteht aus diesen Derivaten. Polyethylenoxid ist bevorzugt, da Lithiumverbindungen in Polyethylenoxid gut löslich sind und die Lithiumionen gut solvatisiert werden.

Das Verbundmaterial kann ein oder mehre Polymere umfassen.

Vorzugsweise werden vernetzte oder unvernetzte Polymere verwendet. In bevorzugten Ausführungsformen ist das Polymer ausgewählt aus der Gruppe umfassend Polyethylenoxid (PEO), Polyacrylnitril, Polyester, Polypropylenoxid, Ethylenoxid/Propylenoxid Copolymer, Polyethylenoxid vernetzt mit trifunktionalem Urethan, Poly(bis(methoxy-ethoxy-ethoxid))-phosphazen (MEEP), triol-artigem Polyethylenoxid vernetzt mit difunktionalem Urethan, Poly((oligo)oxethylen)methacrylat-co-alkalimetall-methacrylat, Polymethylmethacrylat (PMMA), Polymethylacrylonitril (PMAN), Polysiloxane sowie deren Copolymere und Derivate, Polyvinylidenfluorid oder Polyvinylidenchlorid sowie deren Copolymere und Derivate, Poly(chlorotrifluoro-ethylen), Poly(ethylen-chlorotrifluoro-ethylen), Poly(fluoriniertes ethylen-propylen), Acrylat-basierte Polymere, deren kondensierte oder vernetzte Kombinationen, und/oder deren physikalische Mischungen.

Das Polymer enthält darüber hinaus vorzugsweise eine lithiumionenleitende Verbindung, insbesondere Lithiumbistrifluoromethanesulfonimidat (LiTFSI) als lithiumionenleitende Verbindung. Das Polymer kann eine oder mehrere solcher Verbindungen umfassen.

Ein Polymer das wenigstens eine lithiumionenleitende Verbindung enthält, ist ein Polymerelektrolyt im Sinne dieser Anmeldung.

Geeignete Lithiumsalze sind beispielsweise ausgewählt aus der Gruppe umfassend LiAsF₆, LiClO₄, LiSbF₆, LiPtCl₆, LiAlCl₄, LiGaCl₄, LiSCN, LiAlO₄, LiCF₃CF₂SO₃, Li(CF₃)SO₃ (LiTf), LiC(SO₂CF₃)₃, phosphatbasierten Lithiumsalze vorzugsweise LiPF₆, LiPF₃(CF₃)₃ (LiFAP) und LiPF₄(C₂O₄) (LiTFOB), boratbasierte Lithiumsalze vorzugsweise LiBF₄, LiB(C₂O₄)₂ (LiBOB), LiBF₂(C₂O₄) (LiDFOB), LiB(C₂O₄)(C₃O₄) (LiMOB), Li(C₂F₅BF₃) (LiFAB) und Li₂B₁₂F₁₂ (LiDFB) und/oder Lithium-Salze von Sulfonylimiden, vorzugsweise LiN(FSO₂)₂ (LiFSI), LiN(SO₂CF₃)₂ (LiTFSI) und/oder LiN(SO₂C₂F₅)₂ (LiBETI).

Bevorzugte Lithiumsalze sind solche, die sich bei erhöhten Temperaturen beispielsweise von 100 °C oder 120 °C nicht zersetzen. In bevorzugten Ausführungsformen ist das Anion des Lithiumsalzes ausgewählt aus der Gruppe umfassend PF₆⁻, BF₄⁻, SbF₆⁻, AsF₆⁻, C₄F₉SO₃⁻, ClO₄⁻, AlO₂⁻, AlCl₄⁻, (CₓF₂ₓ,₁SO₃)⁻ wobei 0 ≤ x < 1, und/oder (CₓF₂ₓ₊₁SO₂)(C_{y}F_{2y+1}SO₂)N⁻ wobei 0 ≤ x <1 und 0 ≤ y < 1.

Besonders bevorzugt ist das Lithiumsalz ausgewählt aus der Gruppe umfassend LiClO₄, LiBF₄, Lithium-bis(oxalat)borat, Lithium-diflouro(oxalat)borat, LiSOsCFs, Lithium-2-pentafluoroethoxy-1,1,2,2-tetrafluor-ethansulfonat, LiN(FSO₂)₂ und/oder LiN(SO₂CF₃)₂. Lithiumperchlorat (LiClO₄), Lithium-tetrafluoroborat (LiBF₄), Lithium-bis(oxalato)borat (LiBOB), Lithium-diflouro(oxalat)borat (LiDFOB), LiSOsCFs, (LiTf), Lithium-2-pentafluoroethoxy-1,1,2,2-tetrafluor-ethansulfonat (LiSO₃C₂F₄OC₂F₅), Lithium-bis(fluorosulfonyl)imid (LiN(FSO₂)₂, LiFSI) und Lithium-bis(trifluoromethan)sulfonimid (LiN(SO₂CF₃)₂, LiTFSI) sind in vorteilhafter Weise auch bei Temperaturen über 100 °C stabil. Verbundmaterialien enthaltend diese Lithiumsalze zeigen eine besonders gute Leitfähigkeit bei guter mechanischer Stabilität.

Neben dem genannten Polymerelektrolyten kann alternativ auch ein Polyelektrolyt zum Einsatz kommen. Hierbei handelt es sich um Polymere, z. B. Polystyrolsulfonat (PSS), das Li⁺ als Gegenion trägt oder polymerisierte ionische Flüssigkeiten auf Imidazolium-, Pyridinium-, Phosphonium- oder Guanidiniumbasis, die eine diskrete Anzahl an chemisch gebundenen, ionischen Gruppen tragen und aus diesem Grund intrinsisch lithiumionenleitfähig sind.

Vorzugsweise bestehen die Partikel aus einer lithiumionenleitenden Verbindung, insbesondere aus einem Material mit einer granatartigen Kristallphase mit der Summenformel Li_{7+x-y} Mₓ^{II} M₃₋ₓ^{III} M_{2-y}^{IV} M_{y}^{V} O₁₂ wobei M^{II} ein zweiwertiges Kation, M^{III} ein dreiwertiges Kation, M^{IV} ein vierwertiges Kation, M^{V} ein fünfwertiges Kation darstellt, wobei vorzugsweise 0≤ x <3, weiter bevorzugt 0≤ x ≤ 2, 0≤ y <2, und besonders bevorzugt 0≤ y ≤ 1 oder davon abgeleiteten Verbindungen wie Lithiumlanthanzirkonat (LLZO), insbesondere aus mit Al, Nb oder Ta dotierten Verbindungen, oder aus einem Material mit einer zu NaSICon isostrukturellen Kristallphase mit der Summenformel Li_{1+x-y}M⁵⁺_{y}M³⁺ₓM⁴⁺_{2-x-y}(PO₄)₃, wobei x und y im Bereich von 0 bis 1 liegen und (1+x-y)>1 ist und M ein Kation der Wertigkeit +3, +4 oder +5 ist (LISICON) oder davon abgeleiteten Verbindungen.

Das Verbundmaterial kann Partikel einer chemischen Zusammensetzung oder Modifikationen oder es kann Partikel mit verschiedenen chemischen Zusammensetzungen oder Modifikationen umfassen.

Unter LISICON wird im Rahmen dieser Erfindung auch eine zum NASICON isostrukturelle Lithium-Verbindung der Summenformel (1) Li_{1+x-y}M^{V}_{y}M^{III}ₓM^{IV}_{2-x-y}(PO₄)₃ und/oder die Lithium-Verbindung mit granatartiger Struktur der Summenformel (2) Li_{7+x-y} M^{II}ₓ M^{III}₃₋ₓ M^{IV}_{2-y} M^{V}_{y}O₁₂ verstanden, die vorzugsweise kein Germanium enthält. Germanium ist nicht stabil gegenüber Lithiummetall. Ein besser geeignetes vierwertiges Metall ist Titan. Titan ist ein gut verfügbarer Rohstoff, wodurch sich der Elektrolyt und damit die Batterie insgesamt wirtschaftlicher produzieren lassen.

Hat die Integration lithiumionenleitender Partikel die genannten, in der Ionenleitfähigkeit der eingesetzten Bulkmaterialien positiven Auswirkungen, so werden diese durch Widerstände, wie sie an der Grenzfläche zwischen Polymerelektrolyt und Partikel sich ausbilden und überwunden werden müssen, teilweise wieder geschmälert oder völlig aufgehoben. Das Potential, das die Partikel für die Erhöhung der Gesamtleitfähigkeit des Verbundmaterials mitbringt, lässt sich demnach nicht vollständig ausschöpfen. Durch eine geeignete Oberflächenfunktionalisierung der Partikeln lässt sich der genannte Nachteil aber wieder (teilweise) beheben. Die Bereitstellung eines entsprechend oberflächenmodifizieren Materials sowie von Verfahren zur Herstellung derselben ist auch Gegenstand der hier beschriebenen Erfindung.

Die Partikel weisen bevorzugt einen mittleren Partikeldurchmesser von 0,02 µm bis 100 µm auf. Besonders bevorzugt sind Durchmesser im Bereich von 0,2 µm bis 2 µm oder im Bereich von 5 µm bis 70 µm. Besonders bevorzugt sind auch Durchmesser aus den beiden Bereichen von 0,2 µm bis 2 µm und von 5 µm bis 70 µm.

Besonders bevorzugt besitzen die Partikel eine annähernde Kugelform.

Der Grenzflächenwiderstand zwischen dem Polymer und den Partikeln ist bevorzugt durch wenigstens eine der folgenden Maßnahmen (aufgrund einer der folgenden Oberflächenveränderungen der Partikel) verringert:
a) Kovalente Anbindung der Partikel an das Polymer,
b) Van-der-Waals-Anbindung der Partikel an das Polymer,
c) Erleichterung des Lithiumionenübergangs zwischen Polymer und Partikeln durch Beschichtung der Partikel mit wenigstens einem anderen Material.

Vorzugsweise wird das erfindungsgemäße Verbundmaterial für folgende Anwendungen verwendet:
- Festelektrolyt für Lithiumionen- oder Lithiumbatterien, insbesondere für mobile Anwendungen, z.B. Elektronikartikel wie Computern, Smartphones, tragbare Elektronik (Wearables), Werkzeuge wie Powertools oder Transport wie Fahrzeuge, Flugzeuge, Schiffen, U-Booten, E-Bikes
- Festelektrolyt für Lithiumbatterien, insbesondere für stationäre Anwendungen wie Notstromversorgung, Nachtversorgung, Stromnetzstabilisierung, etc..

Die Lithiumionenleitfähigkeit des Verbundmaterials wurde wie folgt bestimmt: Die Leitfähigkeitsmessungen wurden mittels einer Novocontrol 2-Elektrodenmessung (Novocontrol Technologies) in einem Frequenzbereich von 10⁷ Hz bis 10⁻² Hz ausgeführt. Die Elektrodenausführung waren jeweils beide aus Platin oder Nickel (blockierende Messung) oder aus Lithium (nicht blockierend Messung). Es wurden Elektroden mit einem Durchmesser von 13 mm verwendet und einer Dicke von 0,1mm verwendet. Die Messungen wurden durch Pressen des Verbundmaterials zwischen den jeweils gewählten Elektroden bei 60°C durchgeführt. Die Temperaturspanne der Messung erstreckte sich von 0°C (meistens Raumtemperatur) bis 70 °C, wobei in Intervallen von 5 K bzw. 10 K gemessen wurde. Nach Erreichen der jeweiligen Temperatur wurde die Probe 60 Minuten equlibriert, bevor die Leitfähigkeit im Frequenzbereich von 10⁷ Hz bis 10⁻² Hz gemessen wurde.

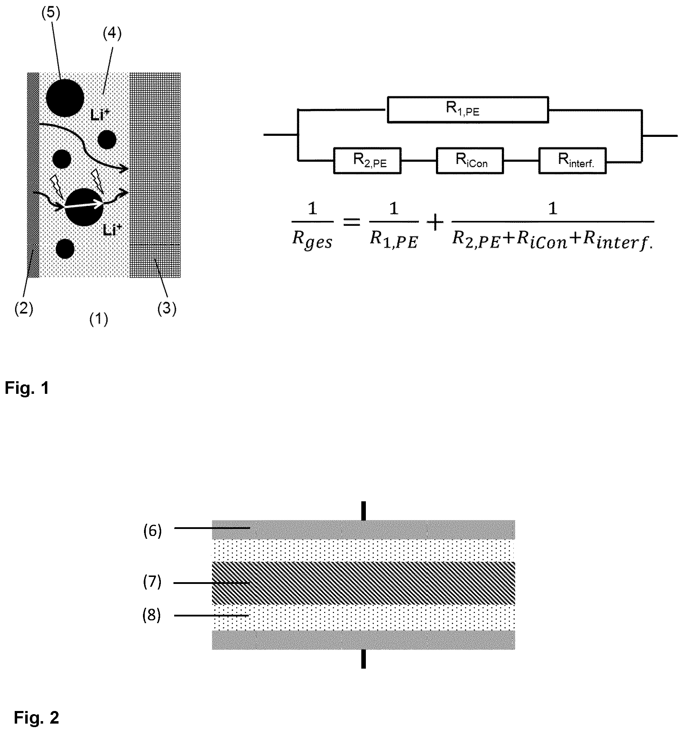

Figur 1 zeigt links den schematischen Aufbau eines erfindungsgemäßen Verbundmaterials (1), das zwischen einer Lithiumanode (2) und einer Kathode (3) angeordnet ist. Das Verbundmaterial (1), umfassend wenigstens ein Polymer (4) und lithiumionenleitende Partikel (5), wobei der Grenzflächenwiderstand für die Lithiumionenleitfähigkeit zwischen dem Polymer (4) und den lithiumionenleitenden Partikeln (5) verringert und somit die Lithiumionenleitfähigkeit größer ist, als bei einem vergleichbaren Verbundmaterial, bei dem der Grenzflächenwiderstand zwischen dem Polymer und den lithiumionenleitenden Partikeln nicht verringert ist.

Auf der rechten Seite von Figur 1 ist der Gesamtwiderstand (R_{ges}) für die Lithiumionenleitfähigkeit des Verbundmaterials dargestellt. Der Kehrwert des Gesamtwiderstands setzt sich aus der Summe der Kehrwerte der Teilwiderstände zusammen, wobei R_{1,PE} der Widerstand des Polymers und (R_{2,PE} + R_{iCon} + R_{interf}.) der Widerstand von Polymer und Partikeln und Ionenleitfähigkeit an der Grenzfläche zwischen Polymer und Partikeln ist. Wenn der Grenzflächenwiderstand für die Lithiumionenleitfähigkeit zwischen dem Polymer (4) und den Partikeln (5) verringert und somit die Lithiumionenleitfähigkeit größer ist, als bei einem vergleichbaren Verbundmaterial, bei dem der Grenzflächenwiderstand zwischen dem Polymer und den Partikeln nicht verringert ist, ist dies der bevorzugte Pfad für die Lithiumionen. Auf beiden Leitungspfaden 1 und 2 existiert ein Widerstandsbeitrag des Polymerelektrolyten R_{1,PE} bzw. R_{2,PE}. Auf dem Pfad 2 sollte dieser wegen der kürzeren Länge entlang derer die Lithiumionen hier durch den Polymerelektrolyten wandern müssen, deutlich niedriger sein (wenn auch der Längenwiderstand selbst gleich ist). Insgesamt ist Pfad 2 dann bevorzugt, wenn die Summe aus den Widerstandsbeiträgen, die bei der Migration der Lithiumionen durch den Polymerelektrolyten, durch den keramischen Festkörperionenleiter und durch die Grenzfläche zwischen Polymerelektrolyten und keramischem Festkörperionenleiter zu überwinden sind, kleiner ist als der Widerstandsbeitrag, der bei Migration der Lithiumionen rein durch den Polymerelektrolyten entlang des Pfads 1 ergibt.

Vorzugsweise besteht das Polymer bzw. der Polymerelekrolyt selbst aus einem nicht-ionenleitenden Polymer, in der Regel wird hier Polyethylenoxid mit einer geeigneten Kettenlänge verwendet, das mit einer Lithiumverbindung, einem Lithiumleitsalz (z. B. LiTFSI) beaufschlagt ist.

Innerhalb des erfindungsgemäßen Verbundmaterials kann z.B. nach dessen Integration in eine Festkörper-Lithiumionenbatterie der Lithiumionen-Transport prinzipiell über drei, zueinander parallel geschaltete Routen erfolgen:
1. Ausschließlich über das Polymer bzw. die Polymerelektrolyt-Matrix selbst;
2. kombiniert sowohl über kurze Streckenabschnitte durch das Polymer bzw. die Polymerelektrolyt-Matrix, als auch über die Partikel hindurch;
3. kombiniert sowohl über kurze Streckenabschnitte durch das Polymer bzw. die Polymerelektrolyt-Matrix als auch entlang der Grenzfläche zwischen den Partikeln und dem Polymer bzw. der Polymerelektrolyt-Matrix.

Da die im Rahmen dieser Erfindung verwendeten anorganischen Materialien in der Regel eine um 2 bis 3 Größenordnungen höhere Lithiumionenleitfähigkeit aufweisen als das Polymer bzw. der Polymerelektrolyt, ist zu erwarten, dass Route 2. bevorzugt beschritten wird. Hingegen erscheinen die Widerstände entlang Route 3. insgesamt zu hoch, so dass diese im Folgenden nicht mehr weiter betrachtet wird. Dies ist allerdings nur der Fall, wenn der Grenzflächenwiderstand (Übergangswiderstand an der Grenzfläche zwischen Polymer bzw. Polymerelektrolyt und den Partikeln) hinreichend gering ist. Dies durch geeignete Modifizierung der Oberfläche der Partikel zu gewährleisten, ist auch eine Aufgabe der hier beschriebenen Erfindung.

### Detaillierte Beschreibung

Erfindungsgemäße lithiumionenleitende Verbundmaterialien, umfassend wenigstens ein Polymer und lithiumionenleitende Partikel, wobei der Grenzflächenwiderstand für die Lithiumionenleitfähigkeit zwischen dem Polymer und den Partikeln verringert ist, wurden beispielsweise wie folgt hergestellt.

Bei allen Beispielen ist die Lithiumionenleitfähigkeit größer, als bei einem vergleichbaren Verbundmaterial, bei dem der Grenzflächenwiderstand zwischen dem Polymer und den Partikeln nicht verringert ist.

Die Oberfläche der Partikeln kann auf unterschiedliche Weise modifiziert werden, so dass sich der im Blick auf die Lithiumionenleitung ausbildende Grenzflächenwiderstand zwischen den Partikeln und der sie umgebenden Polymerelektrolytmatrix einen minimalen Wert annimmt.

Der Grenzflächenwiderstand zwischen Polymer und ionenleitendem Material wurde durch wenigstens eine der folgenden Maßnahmen verringert:
a) Kovalente Anbindung der Partikel an das Polymer,
b) Van-der-Waals-Anbindung der Partikel an das Polymer,
c) Erleichterung des Lithiumionenübergangs zwischen Polymer und Partikeln durch Beschichtung der Partikel mit wenigstens einem anderen Material.

### a) Kovalente Anbindung der Partikel an das Polymer

Hierfür werden die Partikel in einem ersten Schritt an ihrer Oberfläche beispielsweise durch chemische Reaktion mit einem Silan mit geeigneter Seitenkette modifiziert. In einem zweiten Schritt - ebenfalls wieder durch Durchführung einer geeigneten, chemischen Reaktion - erfolgt die Ankopplung des Polymers an die Seitenkette.

Beispiel: Im Fall des üblicherweise in Polymerelektrolyten als Polymer verwendeten Polyethylenoxids (PEO) bietet sich zur Modifizierung der Oberfläche der Partikel die Silanisierung mit 3-Glycidyloxypropyltriethoxysilan (GLYEO) an, wobei eine kovalente Bindung des Modifizierungsagens zu den Partikeln ausgebildet werden. Nach Einbettung der Partikel in die Polymerelektrolytmatrix werden anschließend die an den Kettenenden des PEO vorhandenen OH-Gruppen auf thermischem Wege mit den in der Seitenkette des Silans vorhandenen Epoxygruppen zur Reaktion gebracht. Insgesamt bildet sich somit eine kovalente Brücke zwischen den Partikeln und dem Polymerelektrolyten aus, die den Übergang von Lithiumionen aus den Partikeln in das Polymerelektrolyten signifikant erleichtert. Auf diese Weise bildet sich ein deutlich verringerter Übergangswiderstand an der entsprechenden Grenzfläche aus - verglichen mit dem Fall, in dem Partikel ohne jegliche Modifizierung an ihrer Oberfläche eingesetzt werden.

### b) Van-der-Waals-Anbindung der Partikel an das Polymer

Hierfür werden die Partikel an ihrer Oberfläche durch chemische Reaktion oder einfach nur durch Anlagerung basierend auf dipolaren oder van-der-Waals-Wechselwirkungen mit einem geeigneten Agens modifiziert. Das Agens muss dabei eine ausreichende chemische Kompatibilität mit dem Polymer des Polymerelektrolyten aufweisen, so dass sich nach Einarbeitung der Partikel in den Polymerelektrolyten eine chemische Bindung des Polymers an die Oberfläche der Partikeln auf Basis von van-der-Waals- und/oder dipolaren Wechselwirkungen ausbildet.

Beispiel: Im Fall des üblicherweise in Polymerelektrolyten als Polymer verwendeten Polyethylenoxids (PEO) bietet sich zur Modifizierung der Oberfläche der Partikeln die Silanisierung mit einem Silan an, das eine Seitenkette aus Polyethylenglycol (PEG)-einheiten trägt. Dabei bildet sich eine kovalente Bindung des Modifizierungsagens zu den Partikeln aus. Wahlweise kann auch eine Mahlung in einem kurzkettigen, flüssigen Polyethylenglycol (z. B. PEG 400 oder PEG 200) erfolgen. Hierbei bildet sich eine kovalente Bindung zwischen den PEG-Molekülen und den Partikeln durch eine bei der Mahlung auftretende Veresterungsreaktion zwischen den OH-Endgruppen aus den PEG-Molekülen und dem chemisorbierten Wasser an der Oberfläche der Partikeln aus. In einer dritten Variante werden PEG-Moleküle geeigneter Kettenlänge an die Partikeloberfläche über dipolare und van-der-Waals-Wechselwirkungen angelagert, z. B. indem man die Partikeln durch Rühren mit einer Lösung aus PEG in einem geeigneten Lösemittel (z. B. Wasser, Alkohol etc.) in Kontakt bringt. Nach Einbettung der Partikeln in die Polymerelektrolytmatrix treten anschließend die an der Oberfläche der modifizierten Partikeln vorhandenen PEG-Ketten bzw. Teile davon unter Ausbildung von Verschlaufungen, dipolaren und van-der-Waals-Wechselwirkungen mit den Ketten des PEO in intensiven Kontakt. Insgesamt bildet somit eine auf den genannten Wechselwirkungen basierende chemische Brücke zwischen den Partikeln und dem Polymerelektrolyten aus, die den Übergang von Lithiumionen aus den Partikeln in das Polymerelektrolyt signifikant erleichtert. Auf diese Weise bildet sich ein deutlich verringerter Übergangswiderstand an der entsprechenden Grenzfläche aus - verglichen mit dem Fall, in dem Partikel ohne jegliche Modifizierung an ihrer Oberfläche eingesetzt werden.

c) Erleichterung des Lithiumionenübergangs zwischen Polymer und Partikeln durch Beschichtung der Partikel mit wenigstens einem anderen Material: In diesem Fall ist das andere Material, das als Schale auf die als Kerne fungierenden Partikel aufgebracht werden, im Blick auf zwei unterschiedliche Funktionalitäten zu unterscheiden:
1. Andere Materialien, die eine gewisse Lithiumionenleitfähigkeit aufweisen: Es gibt eine Reihe weiterer lithiumionenleitfähiger Materialien (z. B. Li₂TiO₃, Li₂ZrO₃, Li₂SiO₃, Li₃PO₄, Li₃VO₄, etc.), die ebenfalls eine gewisse, wenn auch gegenüber den bevorzugten Partikeln eingeschränkte Lithiumionenleitfähigkeit aufweisen. Diese können sich aber durch eine deutlich bessere chemische Kompatibilität gegenüber dem Polymer aus dem Polymerelektrolyten auszeichnen und somit zu einem erleichterten Durchtritt der Li⁺-Ladungsträger durch die Grenzfläche hindurchführen. Gegebenenfalls erleichtert auch das Zwischenschalten einer Schicht mit mittlerer Lithiumionenleitfähigkeit den Ladungsübertritt von dem auf der einen Seite sehr gut lithiumionenleitfähigen Partikel in den auf der anderen Seite deutlich schlechter leitfähigen Polymerelektrolyten. Durch das Einbringen einer Zwischenschicht aus einem anderen Material mit mittlerer Lithiumionenleitfähigkeit wird auf diese Weise ein Gradient im Potentialgefälle zwischen Partikeln und Polymerelektrolyten erzeugt und sozusagen eine "Li⁺-Ionen-Rutsche" im Blick auf das elektrochemische Potential erzeugt, dem die Li⁺-Ladungsträger ausgesetzt sind. Der genaue Mechanismus dieses Lösungsansatzes ist allerdings noch nicht vollständig geklärt.
2. Andere Materialien, die per se keine Lithiumionenleitfähigkeit aufweisen: In der Regel sind dies lithiumfreie andere Materialien, die nicht kovalent oder über ausgeprägte van-der-Waals-Wechselwirkungen an das Polymer anbinden und gleichzeitig alleinig keine Lithiumionenleitfähigkeit aufweisen. Hierbei kann es sich z. B. um folgende lithiumfreie Materialien handeln:
   - Silane, deren Seitenketten eine geringfügigere, aber noch hinreichende chemische Kompatibilität zum Polymer besitzen und dadurch nicht in ausgeprägter Weise an das Polymer ankoppeln;
   - Polymere, die eine geringfügigere, aber noch hinreichende chemische Kompatibilität zum Matrixpolymer besitzen und dadurch nicht in ausgeprägter Weise an dieses ankoppeln;
   - Polymere mit stark verzweigter Struktur;
   - Keramische Materialien wie z. B. BaTiOs, Al₂O₃, SiO₂ etc.

Die genannten Materialien können auf verschiedene Weisen den Übertritt der Li⁺-Ladungsträger von dem Verbundkörper in den Polymerelektrolyten erleichtern:
So kann das aufgebrachte, lithiumfreie andere Material beispielsweise als Barriere gegen unerwünschte chemische Reaktionen dienen, die bei direktem Kontakt in unkontrollierter Weise schnell oder auch über einen längeren Zeitraum hinweg stattfinden und zu einer Erhöhung des Widerstands für den Li⁺-Ladungsträgerübertritt führen.

Denkbar ist auch, dass das auf die Partikeln aufgebrachte lithiumfreie, andere Material die Ausbildung elektrochemischer Barrierephänomene vermindert bzw. ganz vermeidet. Ein solches Barrierephänomen kann beispielsweise die Kristallisation des Polymers im grenzflächennahen Bereich sein, die die Geschwindigkeit des Lithiumionentransports in diesen Zonen deutlich herabsetzt.

Des Weiteren ist das Phänomen bekannt, dass sich an Grenzflächen von Materialien unterschiedlicher Leitfähigkeit, wie dies auch an der Grenzfläche von Verbundmaterial und Polymerelektrolyten der Fall ist, Ladungswolken ausbilden, die einen Übertritt der für die Leitung verantwortlichen Ladungsträger, im vorliegenden Fall der Lithiumionen, von dem einen auf das andere Material deutlich erschweren. Durch Applikation eines lithiumfreien, anderen Materials auf die Partikeln kann nach deren Einbringen in die Polymerelektrolytmatrix ein Abstand zwischen beiden Materialtypen erzeugt werden, der die Ausbildung der genannten Ladungswolken vermindert oder gar ganz unterdrückt. Hierdurch wird die zwischen den ionenleitenden Phasen herrschende Polarisation abgebaut und ein Übertritt der Li⁺-Ladungsträger deutlich erleichtert. Da die Schale aus dem anderen Material in diesem Fall an sich keine Lithiumionenleitfähigkeit aufweist, ist darauf zu achten, dass diese nicht zu dick ausgeführt ist, ansonsten wirkt diese als zu großer Widerstand für die Lithiumionenleitfähigkeit.

Die so funktionalisierten Partikel können eingearbeitet als Füllstoff in einen Polymerelektrolyten bzw. in Polyelektrolyten als Elektrolyt in wiederaufladbaren Lithiumionenbatterien, besonders in Feststoff-Lithiumionenbatterien verwendet werden. Einerseits ist dabei der Einsatz als Separator denkbar: Zwischen die Elektroden eingebracht, bewahrt er diese vor einem unerwünschten Kurzschluss und stellt dadurch die Funktionsfähigkeit des Gesamtsystems sicher. Dazu kann das entsprechende erfindungsgemäße Verbundmaterial entweder als Schicht auf eine oder beide Elektroden aufgebracht oder als freistehende Membran als Festkörperelektrolyt in die Batterie integriert werden. Andererseits ist die Compoundierung mit den Elektrodenmaterialien denkbar: In diesem Fall bewerkstelligt das Verbundmaterial den Transport der relevanten Ladungsträger (Litihiumionen und Elektronen) zu den Elektrodenmaterialien und zu den Leitelektroden hin bzw. weg - je nachdem ob die Batterie gerade entladen oder geladen wird.

### Ausführungsbeispiele

### Silanisierung mit GLYEO:

10,0 g Lithiumlanthanzirkoniumoxid (LLZO)-Pulver (d₅₀ = 0,4 µm, spez. Oberfläche: 2,5 m²/g) werden unter Ultraschallbehandlung in 75 ml Isopropanol dispergiert. Zur Partikelsuspension werden unter Rühren 12 ml 25% wässrige NHaOH-Lösung gegeben. Anschließend wird mit 0,9 ml 3-Glycidyloxypropyltriethoxysilan versetzt und das Reaktionsgemisch für 24 h rühren gelassen. Nach Beendigung der Reaktion wird der Feststoff abzentrifugiert, erneut mit Isopropanol aufgenommen, gewaschen und erneut zentrifugiert. Schließlich wird der feuchte Rückstand im Trockenschrank für 5 h bei 65 °C getrocknet.

### Mahlen in PEG 400:

70,0 g Lithiumlanthanzirkoniumoxid (LLZO)-Pulver (d₅₀ = 0,4 µm, spez. Oberfläche: 2,5 m²/g) werden unter Rühren einer Mischung aus 140 g Polyethylenglycol 400 (PEG 400) und 50 ml Isopropanol gegeben. Die Partikelsuspension wird mit 1030 g ZrO₂-Mahlkugeln (d = 0,7 - 0,9 mm) versetzt und der Ansatz bei 1000 U/min im Attritor Netzsch PE 075S behandelt.

Anschließend wird die Partikelsuspension in 3 Durchgängen durch Waschen mit jeweils 50 ml Isopropanol in einem groben Sieb von den Mahlkugeln getrennt, abzentrifugiert und im Trockenschrank für 5 h bei 65 °C getrocknet.

### Beschichtung mit einer lithiumionenleitenden Li₂TiO₃-Schale

18,0 g Lithiumlanthanzirkoniumoxid (LLZO)-Pulver (d₅₀ = 1,0 µm, spez. Oberfläche: 1,0 m²/g) werden unter Ultraschallbehandlung in 633 ml Ethanol dispergiert. Zur Partikelsuspension werden 35 ml 25% wässrige NHaOH-Lösung gegeben. (Lösung A). Parallel dazu werden 3,4 ml Titan(IV)-n-butoxid mit 100 ml Ethanol versetzt und vorsichtig 1,0 ml Acetylaceton zur Lösung zugetropft (Lösung B). In einem weiteren Ansatz werden 2,0 g Lithiumacetat Dihydrat unter Erwärmen in 100 ml Ethanol gelöst (Lösung C). Zunächst werden anschließend Lösung B und Lösung C gemischt, dieses Gemisch danach zur Partikelsuspension (Lösung A) zugegeben und das so resultierende Reaktionsgemisch für 24 h weiter rühren gelassen. Nach Beendigung der Reaktion wird der Feststoff abzentrifugiert 5 min 3000rpm, Schließlich wird der feuchte Rückstand im Trockenschrank für 5 h bei 65 °C getrocknet und anschließend nochmals für 2 h bei 750 °C (Aufheizrate 10°C/min) calciniert.

### Beschichtung mit einer lithiumfreien BaTiOs-Schale

18,0 g Lithiumlanthanzirkoniumoxid (LLZO)-Pulver (d₅₀ = 1,0 µm, spez. Oberfläche: 1,0 m²/g) werden unter Ultraschallbehandlung in 633 ml Ethanol dispergiert. Zur Partikelsuspension werden 35 ml 25% wässrige NHaOH-Lösung gegeben. (Lösung A). Parallel dazu werden 3,4 ml Titan-n-butoxid mit 100 ml Ethanol versetzt und vorsichtig 1,0 ml Acetylaceton zur Lösung zugetropft (Lösung B). In einem weiteren Ansatz werden 3,4 g Bariumperchlorat in 100 ml Ethanol gelöst (Lösung C). Zunächst werden anschließend Lösung B und Lösung C gemischt, dieses Gemisch danach zur Partikelsuspension (Lösung A) zugegeben und das so resultierende Reaktionsgemisch für 24 h weiter rühren gelassen. Nach Beendigung der Reaktion wird der Feststoff abzentrifugiert, erneut mit Ethanol aufgenommen, gewaschen und erneut zentrifugiert.

Schließlich wird der feuchte Rückstand im Trockenschrank für 5 h bei 65 °C getrocknet und anschließend nochmals für 4 h bei 500 °C calciniert.

Herstellung einer lithiumionenleitfähigen Membran aus dem erfindungsgemäßen Verbundmaterial, wobei das Verbundmaterial ein mit 15 Vol.-% Partikeln gefülltes Polymer umfasst.

1,73 g LiTFSI werden in 246 ml Acetonitril gelöst. Anschließend wird die Lösung mit 5,0 g Polyethylenoxid (PEO) (M = 600000 g/mol) versetzt (dieser Schritt wird einem Handschuhkasten ausgeführt) und solange gerührt (über Nacht), bis sich das Polymer vollständig gelöst hat. Danach werden 2,57 g an oberflächenmodifiziertem LLZO-Pulver in der Lösung des zuvor hergestellten Polymerelektrolyten dispergiert. 30 ml des so erhältlichen Gemischs werden in eine Teflon-Form mit einer Grundfläche von 10 × 10 cm² ausgegossen und das Lösemittel im Exsikkator unter einem leichten Stickstoffstrom abdampfen gelassen. Zurück bleibt eine ca. 120 µm dicke Membran aus Verbundmaterial, die vorsichtig aus der Teflon-Form herausgelöst werden kann. Zur Entfernung letzter Lösemittelreste wird nochmals für 5 h bei 65 °C im Vakuumtrockenschrank getrocknet. Anschließend wird die Probe mittels Impedanzspektroskopie im Blick auf die in der Probe vorhandenen Lithiumionenleitwiderstände vermessen und mit einer Probe verglichen, die entsprechend mit der gleichen Menge nicht-oberflächenmodifiziertem LLZO-Pulver hergestellt wurde. Die Lithiumionenleitfähigkeit des erfindungsgemäßen Verbundkörpers ist signifikant höher und der Verbundkörper eignet sich daher besonders als Lithiumionenleiter in Lithiumionenbatterien.

### Bestimmung des Grenzflächenwiderstands zwischen Polymer (Polymerelektrolyt) und Partikelmaterial mittels Impedanzspektroskopie

Zur Bestimmung des reinen Grenzflächenwiderstands zwischen Polymer und Partikelmaterial an sich ist die Verwendung eines speziellen Probenaufbaus in Form eines Schichtaufbaus möglich. So ist es grundsätzlich möglich, Rückschlüsse auf die Gute eines erfindungsgemäßen Verbundmaterials, das ein entsprechendes Polymer und entsprechende Partikel umfasst, zu ziehen und darüber hinaus zu überprüfen, ob ein Verbundmaterial unter den Schutzumfang fällt. Dieser Schichtaufbau ist in Figur 2 dargestellt (Au-Elektrode (6), LLZO-Scheibe (Partikelmaterial) (7), Polymer(elektrolyt) (8)). Hierbei liegt das Material aus dem die Partikel bestehen als runde Scheibe vor, auf deren Grundfläche beiderseits eine dünne Lage des Polymers aufgebracht wird. Zur Verringerung des Grenzflächenwiderstands zwischen Polymer und Partikelmaterial werden die Grundflächen des Partikelmaterials vor dem Aufbringen des Polymers mit den Oberflächenveränderungen (z.B. Funktionalisierungen bzw. Beschichtungen) versehen.

Beispielsweise wurden zur Bestimmung des Grenzflächenwiderstands in einem Handschuhkosten (MBraun, H₂O + O₂ < 0,1 ppm) Polymerelektrolytschichten (PEO + LiTFSI mit Li : O = 1 : 18, Sigma Aldrich, Molekulargewicht PEO = 4 × 105 g/mol) auf beide Seiten der aus dem Festkörperionenleiterpartikelmaterial bestehenden Scheibe angedrückt. Für besseren Kontakt wurden diese Proben luftdicht verpackt und im Ofen bei 60 °C für 1 h mittels eines 1,2 kg Gewichtes gepresst.

Die Proben wurden innerhalb eines Handschuhkastens in eine BDS1308-Sample Cell von Novocontrol eingebaut. Diese ist über einen ZG4-Impedance Interface (Novocontrol) mit einem Alpha-A-High Performance Analyzer Mainframe (Novocontrol) verbunden. Die Temperatur wurde konstant (±0,1 K) gehalten und mittels eines Pt-Sensors kontrolliert. Mittels der Software WinDETA wurden AC-Impedanzmessungen im Frequenzbereich von 10⁻¹ Hz bis 2 × 10⁷ Hz durchgeführt. Die Spannungsamplitude ist 20 mV.

Zur Auswertung wurde die Software ZView (Scribner Associates, Inc.) verwendet. Zunächst wurden symmetrische Au-LLZO-Au und Au-PEM-Au Proben (PEM=PolymerElektrolytMembran) vermessen, um die charakteristischen Frequenzen und Leitfähigkeiten zu bestimmen. Anschließend erfolgte die eigentliche Charakterisierung der beschriebenen Au-PEM-Festkörperionenleiter-PEM-Au-Referenz- und Au-PEM-FS-Festkörperionenleiter-FS-PEM-Au (FS=Funktionalisierungsschicht)-Sandwichsysteme. Die resultierenden Halbkreise im Nyquist-Diagramm wurden mittels RQ-Elementen gefittet. Für das nicht-ideale Blockieren der Gold-Elektroden wurde ebenfalls ein Constant Phase Element (CPE) angefittet. Der erste Halbkreis entspricht im Wesentlichen der Bulk-Leitfähigkeit der Polymerschichten (die Leitfähigkeit des Festkörperionenleiterpartikelmaterials ist in der Regel ungefähr zwei Größenordnungen höher als die des Polymers, sodass dessen Beitrag komplett von dem Polymer-Halbkreis überlagert wird). Der zweite Halbkreis repräsentiert daher den gesuchten Grenzflächenbeitrag. Die Kapazitäten können mittels der Brug-Formel berechnet und nach dem Schema von Irvine, Sinclair und West klassifiziert werden.

Im Fall der Verwendung von LLZO als Festkörperionenleitermaterial wurde für das Au-PEM-Festkörperionenleiter-PEM-Au-Referenzsystem, bei dem eine diskförmige Festkörperionenleitermaterialscheibe aus einem massiven LLZO-Schmelzblock herauspräpariert und als solche unbeschichtet belassen wurde, wurde der Übergangswiderstand zwischen Festkörperionenleiter und Polymerelektrolyten zu 7 × 10⁵ Ohm cm² bestimmt.

Die Bestimmung des Grenzflächenwiderstands zwischen Polymer und funktionalisiertem bzw. beschichtetem Festkörperionenleiterpartikelmaterial erfolgte an einem scheibenförmigen Formkörper der durch Sintern aus dem entsprechenden pulverförmigen Festkörperionenleitermaterial erzeugt wurde. Hierzu wurde in einer besonderen Ausführungsform LLZO als Festkörperionenleiterpartikelmaterial zunächst uniaxial zu einem Pressling gepresst und der dabei erhältliche Vorformling durch Sintern zu der gewünschten dichten Scheibenprobe verdichtet.

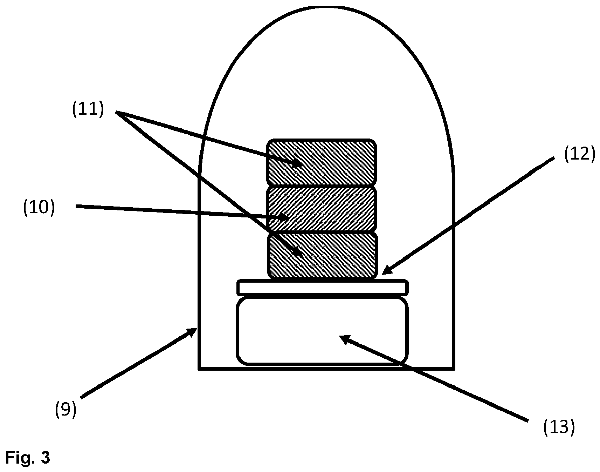

Beispielsweise wurden für die Herstellung des Presslings 0,5 g LLZO-Pulver, mit Hilfe einer hydraulischen Handpresse, mit 30 kN für zwei Minuten gepresst. Der Pressling (10) hat im Anschluss einen Durchmesser von 10 mm und eine Dicke von 1,9 mm bis 2,2 mm. Zur Herstellung des scheibenförmigen Formkörpers wurden anschließend drei Presslinge ("Opfer"-Pressling (11), Pressling für Oberflächenveränderung (10), "Opfer"-Pressling (11)), wie im schematischen Aufbau in Figur 3 gezeigt, dreifach übereinander auf einem Zirkonoxid-Fließ (12) gestapelt. Die Proben wurden mit einem Aluminiumoxidtiegel (9) abgedeckt und mittig im Ofen auf einem SiO₂-Träger (13) platziert. Von 25°C wurde der Ofen mit 10 K/min auf 900°C aufgeheizt. Die Temperatur von 900°C wurde eine Stunde gehalten und im Anschluss wird der Ofen mit 2 K/min auf 1150°C erhitzt. Nachdem der Ofen eine Stunde bei 1150°C die Temperatur gehalten hatte, kühlte er mit der Ofenkennlinie auf 700°C ab. Bei 700°C wurde die Probe entnommen und im Exsikkator abgekühlt. Im Anschluss wurde die mittlere Probe zur Beschichtung weiterverwendet.

Die Grundflächen dieses Sinterkörpers wurden anschließend an ihrer Oberfläche zur Verringerung des Grenzflächenwiderstands modifiziert bzw. beschichtet. Anschließend wurden die funktionalisierten Scheiben aus Festkörperionenleitermaterial in den bereits oben beschriebenen schichtförmigen Messaufbau integriert und der Übergangswiderstand an der Grenzfläche zwischen Polymer und funktionalisiertem Festkörperionenleiterpartikelmaterial nach der oben für das nicht-funktionalisierte bzw. unbeschichtete Referenzsystem Messprozedur entsprechend bestimmt.

Zur Herstellung von funktionalisierten bzw. beschichteten scheibenförmigen, aus Festkörperionenleiterpartikelmaterial (hier LLZO) bestehenden Scheibenproben wurde wie folgt vorgegangen:

### Silanisierung mit GLYEO:

5 g 3-Glycidyloxypropyltriethoxysilan (GLYEO) in 10 ml Isopropanol geben. Zum Gemisch zunächst 2,17 ml Wasser und anschließend 0,07 ml 30 %ige Essigsäure zugeben. Dieses Konzentrat rund 2 min rühren lassen. Anschließend mit Ethanol auf 500 ml auffüllen.

Die Beschichtungslösung wurde auf beide Grundflächen der scheibenförmigen, aus LLZO bestehenden Scheibe aufgesprüht an Luft bei Raumtemperatur getrocknet. Anschließend wurde die entsprechend beschichtete Scheibe in den bereits oben beschriebenen schichtartigen Messaufbau Au-PEM-FS-Festkörperionenleiter-FS-PEM-Au (FS = Funktionalisierungsschicht) integriert. Zur kovalenten Anbindung der endständigen OH-Gruppen aus den PEO-Ketten des Polymerelektrolyten an die Oberfläche des mit GLYEO funktionalisierten LLZO-Scheibenprobe wurden diese mit den dort entsprechend vorhandenen Epoxidgruppen durch Temperaturbehandlung 100 °C, 1 h reagieren lassen. Nach Abkühlen auf Raumtemperatur wurde der Grenzflächenwiderstand an der Grenzfläche zwischen Polymer und funktionalisiertem Festkörperionenleiterpartikelmaterial nach der oben beschriebenen Messprozedur bestimmt. Der Messwert beträgt hierbei 6 × 10³ Ohm cm² und liegt damit um rund zwei Größenordnungen niedriger als der der unbehandelten Referenz.

### Funktionalisierung mit PEG 200:

5 g PEG 200 in 500 ml Isopropanol geben.

Die Beschichtungslösung wurde auf beide Grundflächen der scheibenförmigen, aus LLZO bestehenden Scheibe aufgesprüht an Luft bei Raumtemperatur getrocknet. Anschließend wurde die entsprechend beschichtete Scheibe wie oben beschrieben in einen sandwichartigen Messaufbau Au-PEM-FS-Festkörperionenleiter-FS-PEM-Au (FS = Funktionalisierungsschicht) integriert. Anschließend wurde der Grenzflächenwiderstand an der Grenzfläche zwischen Polymerelektrolyten und funktionalisiertem Festkörperionenleitermaterial nach der oben beschriebenen Messprozedur bestimmt. Der Messwert beträgt hierbei 3 × 10³ Ohm cm² und liegt damit um mehr als zwei Größenordnungen niedriger als der der unbehandelten Referenz.

### Beschichtung mit Li₂ZrO₃-Schicht:

In einem 1000 mL Rundhalskolben zu 63 g (0,15 mol) einer 78 %igen Zr(OiPr)₄-Lösung in Isopropanol eine äquimolare Menge, d. h. 15,0 g, Acetylaceton mit Hilfe eines Tropftrichters bei einer Tropfgeschwindigkeit von ca. 1 Tropfen pro Sekunde unter ständigem Rühren zugeben. Nach dem Rühren für ca. 1 h bei RT dem Reaktionsgemisch 8,1 g (0,45 mol) Wasser zur Hydrolyse hinzugeben. Nach ca. 15 min Rührzeit 30,6 g (0,30 mol) Lithiumacetat Dihydrat zugeben. Um das finale Beschichtungssol zu erhalten, das Konzentrat schließlich mit einem Gemisch aus 365 g Ethanol und 19,2 g (0,129 mol) Triethanolamin verdünnen. Feststoffgehalt an Li₂ZrO₃ (M = 183,09 g/mol) in der Lösung beträgt rund 50 g/l bzw. 5 Gew.%. Die Beschichtungslösung wurde auf beide Grundflächen der scheibenförmigen, aus LLZO bestehenden Scheibe aufgesprüht und nach dem Trocknen bei 650 °C, 30 min eingebrannt. Es bildete sich eine Li₂ZrO₃-Schicht mit einer Dicke von rund 100 nm aus. Anschließend wurde die entsprechend beschichtete Scheibe wie oben beschrieben in einen sandwichartigen Messaufbau Au-PEM-FS-Festkörperionenleiter-FS-PEM-Au (FS = Funktionalisierungsschicht) integriert und der Grenzflächenwiderstand an der Grenzfläche zwischen Polymer und funktionalisiertem Festkörperionenleiterpartikelmaterial nach der oben beschriebenen Messprozedur bestimmt. Der Messwert beträgt hierbei 7 × 10⁴ Ohm cm² und liegt damit um rund eine Größenordnung niedriger als der der unbeschichteten Referenz.

### Beschichtung mit einer BaTiOs-Schicht:

In einem 1000 mL Rundhalskolben zu 42,6 g (0,15 mol) Ti(OiPr)₄ eine äquimolare Menge, d. h. 15,0 g, Acetylaceton mit Hilfe eines Tropftrichters bei einer Tropfgeschwindigkeit von ca. 1 Tropfen pro Sekunde unter ständigem Rühren zugeben. Nach dem Rühren für ca. 1 h bei Raumtemperatur dem Reaktionsgemisch 8,1 g (0,45 mol) Wasser zur Hydrolyse hinzugeben. Nach ca. 15 min Rührzeit 50,4 g (0,15 mol) Bariumperrchlorat zugeben. Um das finale Beschichtungssol zu erhalten, das Konzentrat schließlich mit 385 g Ethanol verdünnen. Feststoffgehalt an BaTiOs (M = 276,55 g/mol) in der Lösung beträgt rund 75 g/l bzw. 7,5 Gew.%. Die Beschichtungslösung wurde auf beide Grundflächen der runden, aus LLZO bestehenden Scheibe aufgesprüht und nach dem Trocknen bei 650 °C, 30 min eingebrannt. Es bildete sich eine BaTiOs-Schicht mit einer Dicke von rund 100 nm aus. Anschließend wurde die entsprechend beschichtete Scheibe wie oben beschrieben in einen schichtartigen Messaufbau Au-PEM-FS-Festkörperionenleiter-FS-PEM-Au (FS = Funktionalisierungsschicht) integriert und der Grenzflächenwiderstand an der Grenzfläche zwischen Polymer und funktionalisiertem Festkörperionenleiterpartikelmaterial nach der oben beschriebenen Messprozedur bestimmt. Der Messwert beträgt hierbei 2 × 104 Ohm cm² und liegt damit um rund eine Größenordnung niedriger als der der unbeschichteten Referenz.

## Patentansprüche

1. Lithiumionenleitendes Verbundmaterial, umfassend wenigstens ein Polymer und lithiumionenleitende Partikel,
**dadurch gekennzeichnet,**
**dass** der Grenzflächenwiderstand für die Lithiumionenleitfähigkeit zwischen dem Polymer und den Partikeln aufgrund einer Silanisierung der Partikel verringert und somit die Lithiumionenleitfähigkeit größer ist als bei einem vergleichbaren Verbundmaterial, bei dem der Grenzflächenwiderstand zwischen dem Polymer und den Partikeln nicht verringert ist.

2. Lithiumionenleitendes Verbundmaterial nach einem der vorhergehenden Ansprüche,
**dadurch gekennzeichnet**, wobei die Silanisierung mit einem Silan erfolgt,
dass mindestens eine Seitenkette aus Polyethylenglycol (PEG)-Einheiten trägt.

3. Lithiumionenleitendes Verbundmaterial nach einem der vorhergehenden Ansprüche,
**dadurch gekennzeichnet, dass** die Silanisierung mit 3-Glycidyloxypropyltriethoxysilan (GLYEO) erfolgt.

4. Lithiumionenleitendes Verbundmaterial nach einem der vorhergehenden Ansprüche,
**dadurch gekennzeichnet,**
**dass** die Partikel aus einer lithiumionenleitenden Verbindung bestehen, insbesondere aus einem Material mit einer granatartigen Kristallphase mit der Summenformel Li_{7+x-y} Mₓ^{II} M₃₋ₓ^{III} M_{2-y}^{IV} M_{y}^{V} O₁₂ wobei
M^{II} ein zweiwertiges Kation,
M^{III} ein dreiwertiges Kation,
M^{IV} ein vierwertiges Kation,
M^{V} ein fünfwertiges Kation darstellt, wobei
vorzugsweise 0≤ x <3, weiter bevorzugt 0≤ x ≤ 2, 0≤ y <2, und besonders bevorzugt 0≤ y ≤ 1
oder davon abgeleiteten Verbindungen, insbesondere Lithiumlanthanzirkonat, insbesondere aus mit Al, Nb oder Ta dotierten Verbindungen,
oder aus einem Material mit einer zu NaSICon isostrukturellen Kristallphase mit der Summenformel Li_{1+x-y}M⁵⁺_{y}M³⁺ₓM⁴⁺_{2-x-y}(PO₄)₃, wobei
x und y im Bereich von 0 bis 1 liegen und (1+x-y)>1 ist und M ein Kation der Wertigkeit +3, +4 oder +5 ist oder davon abgeleiteten Verbindungen.

5. Lithiumionenleitendes Verbundmaterial nach Anspruch 4,
**dadurch gekennzeichnet, dass** das vierwertige Kation Titan ist.

6. Lithiumionenleitendes Verbundmaterial nach einem der vorhergehenden Ansprüche,
**dadurch gekennzeichnet,**
**dass** das Polymer Polyethylenoxid und Derivate von Polyethylenoxid umfasst.

7. Lithiumionenleitendes Verbundmaterial nach einem der vorhergehenden Ansprüche,
**dadurch gekennzeichnet,**
**dass** das Polymer wenigstens eine lithiumionenleitende Verbindung enthält, insbesondere Lithiumbistrifluoromethanesulfonimidat als lithiumionenleitende Verbindung.

8. Lithiumionenleitendes Verbundmaterial nach einem der vorhergehenden Ansprüche,
**dadurch gekennzeichnet,**
**dass** die Partikel einen mittleren Partikeldurchmesser von 0,02 µm bis 100 µm, bevorzugt 0,2 µm bis 2 µm und/oder 5 µm bis 70 µm aufweisen.

9. Lithiumionenleitendes Verbundmaterial nach einem der vorhergehenden Ansprüche,
**dadurch gekennzeichnet,**
**dass** der Grenzflächenwiderstand zwischen dem Polymer und den Partikeln aufgrund einer Silanisierung der Partikel durch wenigstens eine der folgenden Maßnahmen verringert ist:
a) Kovalente Anbindung der Partikel an das Polymer,
b) Van-der-Waals-Anbindung der Partikel an das Polymer.

10. Lithiumionenleitendes Verbundmaterial nach einem der vorhergehenden Ansprüche,
**dadurch gekennzeichnet, dass** die Partikel von dem Polymer umgeben sind.

11. Lithiumionenleitendes Verbundmaterial nach einem der vorhergehenden Ansprüche,
**dadurch gekennzeichnet, dass** die Lithiumionen leitende Verbindung ausgewählt ist aus der Gruppe umfassend LiAsF₆, LiClO₄, LiSbF₆, LiPtCl₆, LiAlCl₄, LiGaCl₄, LiSCN, LiAlO₄, LiCF₃CF₂SO₃, Li(CF₃)SO₃ (LiTf), LiC(SO₂CF₃)₃, LiPF₆, LiPF₃(CF₃)₃ (LiFAP), LiPF₄(C₂O₄) (LiTFOB), LiBF₄, LiB(C₂O₄)₂ (LiBOB), LiBF₂(C₂O₄) (LiDFOB), LiB(C₂O₄)(C₃O₄) (LiMOB), Li(C₂F₅BF₃ ) (LiFAB), Li₂B₁₂F₁₂ (LiDFB), LiN(FSO₂)₂ (LiFSI), LiN(SO₂CF₃)₂ (LiTFSI), LiN(SO₂C₂F₅)₂ (LiBETI)LiClO₄, Lithiumbis(oxalat)borat, Lithiumdifluor(oxalat) Borat, LiSOsCFs, Lithium-2-pentafluorethoxy-1,1,2,2-tetrafluorethansulfonat (LiSO₃C₂F₄OC₂F₅) und/oder Mischungen davon.

12. Lithiumionenleitendes Verbundmaterial nach einem der vorhergehenden Ansprüche,
**dadurch gekennzeichnet, dass** das Polymer ausgewählt ist aus der Gruppe bestehend aus
Polyethylenoxid (PEO), Polyacrylnitril, Polyester, Polypropylenoxid, Ethylenoxid/Propylenoxid-Copolymer, mit trifunktionellem Urethan vernetztes Polyethylenoxid, Poly(bis(methoxy-ethoxyethoxid))phosphazen (MEEP), triolartiges Polyethylenoxid, vernetzt mit difunktionelles Urethan, Poly((oligo)oxethylen)methacrylat-Koalkalimetallmethacrylat, Polymethylmethacrylat (PMMA), Polymethylacrylnitril (PMAN), Polysiloxane sowie deren Copolymere und Derivate, Polyvinylidenfluorid oder Polyvinylidenchlorid sowie deren Copolymere und Derivate, Poly(chlortrifluorethylen), Poly(ethylen-chlortrifluorethylen), Poly(fluoriertes Ethylen-Propylen), Polymere auf Acrylatbasis, kondensierte oder vernetzte Kombinationen davon und/oder Mischungen davon.

13. Verwendung des lithiumionenleitenden Verbundmaterials nach einem der vorhergehenden Ansprüche als Elektrolyt in einer Feststoffbatterie.

14. Verwendung des lithiumionenleitenden Verbundmaterials nach Anspruch 13 bei Betriebstemperaturen der Feststoffbatterie zwischen 0°C und 70°C.

15. Feststoffbatterie enthaltend das lithiumionenleitendes Verbundmaterial nach einem der vorhergehenden Ansprüche 1 bis 12.
